# EUROPÄISCHE PATENTSCHRIFT

(11) **EP 1 339 564 B1**
(45) Veröffentlichungstag und Bekanntmachung des Hinweises auf die Patenterteilung: **08.06.2005**
(21) Anmeldenummer: 01989401.3
(22) Anmeldetag: 06.12.2001
(51) Int. Cl.: B60N 2/46

(54) **ARMLEHNENBAUGRUPPE FÜR EINE KRAFTFAHRZEUGTÜR**
ARMREST ASSEMBLY FOR A MOTOR VEHICLE DOOR
ENSEMBLE ACCOUDOIR POUR UNE PORTIERE DE VEHICULE AUTOMOBILE

(30) Priorität: 06.12.2000 DE 10060857; 29.01.2001 DE 10104077
(43) Veröffentlichungstag der Anmeldung: 03.09.2003
(73) Patentinhaber: Brose Fahrzeugteile GmbH & Co. KG, Coburg, 96450 Coburg (DE)
(72) Erfinder: BÖRNCHEN, Thomas, 96052 Bamberg (DE); EISENTRAUDT, Michael, 96342 Stockheim (DE); SCHLECHTRIEMEN, Martin, 96149 Breitengüssbach (DE); STAMMBERGER, Werner, 96253 Weissenbrunn (DE); WAGNER, Frank, 90408 Nürnberg (DE)
(74) Vertreter: Baumgärtel, Gunnar, Dr.
(86) Internationale Anmeldenummer: PCT/DE2001/004677
(87) Internationale Veröffentlichungsnummer: WO 2002/045993

(56) Entgegenhaltungen:
- EP-A1- 1 048 517
- DE-A1- 4 002 243
- DE-A1- 4 135 279

## Beschreibung

Die Erfindung betrifft eine Armlehnenbaugruppe für eine Kraftfahrzeugtür gemäß dem Oberbegriff des Patentanspruchs 1.

Eine derartige Armlehnenbaugruppe umfasst eine durch einen Antrieb in ihrer räumlichen Lage, insbesondere in ihrer Höhe, verstellbare Armauflage sowie ein bei Aktivierung des Antriebs entlang der Verstellrichtung der Armauflage bewegbares, insbesondere plattenförmiges, Übertragungsglied, mit dem die Armauflage verbunden ist. Die Kopplung zwischen dem Antrieb und dem Übertragungsglied kann durch ein Getriebe erfolgen, durch das bei Aktivierung des Antriebs das Übertragungsglied verstellt wird.

Aus der DE 40 02 243 A1 ist eine höhenverstellbare Armlehne an der Tür eines Kraftfahrzeugs bekannt, die eine Führung zur Auf- und Abbewegung der Armlehne und Mittel zur Festlegung der Armlehne in einer gewünschten Position aufweist. Die Führung ist dabei zusammen mit den Antriebselementen der verstellbaren Armlehne auf einer Grundplatte angeordnet, die am Türinnenblech befestigt wird. Hierbei besteht jedoch das Problem, dass durch die Befestigung der Grundplatte der höhenverstellbaren Armlehne an dem Türinnenblech zugleich auch die Position der Armlehne bezüglich der Türinnenverkleidung, die als Designelement das Türinnenblech zum Fahrzeuginnenraum hin abdeckt, festgelegt wird. Da die Position der Türinnenverkleidung bezüglich des Türinnenblechs toleranzbehaftet ist, hat dies unterschiedliche, toleranzabhängige Anordnungen der Armlehne bezüglich der Türinnenverkleidung zur Folge. Dies beeinträchtigt das Design einer Kraftfahrzeugtür.

In der DE 41 35 279 A1 als nächstliegendem Stand der Technik, ist eine höhenverstellbare Armlehne für eine Kraftfahrzeugtür beschrieben, die zu Komfortzwecken zusätzlich auch in der Breite verstellbar ist, d. h., die Lage der Armlehne bezüglich der Türinnenwand ist sowohl entlang der vertikalen Fahrzeugachse als auch senkrecht hierzu entlang der horizontalen Fahrzeugquerachse einstellbar. Zwischen der Armauflage und der Türinnenwand eventuell auftretende Spalte werden dabei durch eine Abdeckung in Form einer Folie oder einer verschiebbaren waagerechten Leiste überdeckt. Somit hängt hier das Design des Übergangsbereichs zwischen Armauflage und Türinnenwand von der Einstellung der Position der Armauflage bezüglich der Türinnenwand ab, da sich hieraus ergibt, in welchem Umfang ein Spalt durch eine entsprechende Abdeckung zu überdecken ist.

Der Erfindung liegt das Problem zugrunde, eine Armlehnenbaugruppe der eingangs genannten Art zu schaffen, mit der das Design der Kraftfahrzeugtür im Übergangsbereich zwischen Armtehnenbaugruppe und Türinnenverkleidung der Kraftfahrzeugtür möglichst wenig beeinträchtigt wird.

Diese Aufgabe wird erfindungsgemäß durch die Schaffung einer Armlehnenbaugruppe mit den Merkmalen des Patentanspruchs 1 gelöst.

Danach ist die Position der Armauflage der Armtehnenbaugruppe in der Kraftfahrzeugtür zum Toleranzausgleich in Fahrzeuglängsrichtung durch Justage einstellbar.

Hierdurch lassen sich Toleranzen, die zwischen einzelnen Baugruppen der Fahrzeugtür, insbesondere zwischen dem Türinnenblech und der Türinnenverkleidung, bestehen, derart ausgleichen, dass die Armauflage eine definierte Position bezüglich der Türinnenverkleidung einnimmt.

Die erfindungsgemäße Lösung eignet sich vor allem zur Anwendung bei Armlehnen mit einem modular aufgebauten Verstellmechanismus, bei dem der Antrieb, das nachgeordnete Getriebe sowie das Übertragungsglied auf einem gemeinsamen Träger angeordnet sind, der an einer Kraftfahrzeugtür, insbesondere am Türinnenblech, befestigbar ist. Der Antrieb, das Getriebe und das Übertragungsglied können eine vorprüfbare Baueinheit bilden, die bei Aktivierung des Antriebs eine Verstellbewegung des Übertragungsgliedes erzeugt, ohne dass diese modulare Baueinheit bereits in eine Kraftfahrzeugtür eingebaut ist. Der Verstellmechanismus der Armlehne lässt sich dann außerhalb einer Fahrzeugtür komplett auf einem Träger vormontieren und auf seine Funktionsfähigkeit überprüfen.

Nach dem Einbau des Verstellmechanismus in einer Fahrzeugtür kann die Position der verstellbaren Armauflage, welche wahlweise vor oder nach Einbau des Verstellmechanismus in eine Fahrzeugtür mit dem Übertragungsglied verbunden wird, so eingestellt werden, dass sich eine definierte, vorgebbare Positionierung der Armauflage bezüglich der Türinnenverkleidung ergibt.

Die Einstellung der Lage der Armauflage bezüglich der Türinnenverkleidung erfolgt dabei derart, dass sich die Armauflage in ihrer Höhe verstellen lässt, ohne dass hierbei die Türinnenverkleidung durch Kontakt mit der Armauflage gewölbt wird. Gleichzeitig sind die Spaltmaße zwischen Armauflage und Türinnenverkleidung aber so einzustellen, dass sie für einen Fahrgast möglichst unsichtbar bleiben.

Zur Einstellung der Position der Armauflage in Fahrzeuglängsrichtung dient vorzugsweise eine sich in dieser Richtung erstreckende Führung, in die die Armauflage mit einem Führungselement eingreift.

Bei dem Führungselement kann es sich beispielsweise um ein Verbindungselement handeln, durch das die Armauflage mit dem Übertragungsglied verbunden wird, welches zur Einstellung der Höhe der Armauflage verstellbar ist.

Das Verbindungselement erstreckt sich vorzugsweise in einem Distanzelement, das mit der Armauflage verbunden, insbesondere einstückig an dieser angeformt ist, und das gemeinsam mit dem Verbindungselement in der vorgenannten Führung in Fahrzeuglängsrichtung bewegbar ist. Eine zusätzliche oder alternative Einstellmöglichkeit in Fahrzeuglängsrichtung ergibt sich, wenn das Verbindungselement in dem Distanzelement in Fahrzeuglängsrichtung bewegbar ist, so dass die Armauflage bezüglich des Übertragungsgliedes in Fahrzeuglängsrichtung in ihrer Position eingestellt werden kann.

Die zur Verstellung der Armauflage in Fahrzeuglängsrichtung vorgesehene Führung erstreckt sich in der Türinnenverkleidung und ist an ihrem Rand vorzugsweise mit einem Führungsrahmen versehen, der besonders gute Gleiteigenschaften aufweisen kann. Das Übertragungsglied einerseits und die Armauflage andererseits sind beidseits der Türinnenverkleidung angeordnet, so dass sich die Führung zwischen dem Übertragungsglied und der Armauflage erstreckt.

Eine zusätzliche Einstellbarkeit der Position der Armauflage senkrecht zur Fahrzeuglängsrichtung und senkrecht zur Verstellrichtung der Armauflage erfolgt vorzugsweise mittels eines elastisch deformierbaren Elementes, das beispielsweise zwischen der Türinnenverkleidung und dem Übertragungsglied oder zwischen der Türinnenverkleidung und der Armauflage angeordnet sein kann.

Durch Deformation dieses elastischen Elementes, bei dem es sich beispielsweise um eine Feder oder um ein Gummielement handeln kann, lassen sich der Abstand der Armauflage und gegebenenfalls des Übertragungsgliedes bezüglich der Türinnenverkleidung einstellen, wobei die Deformation des elastischen Elementes vorzugsweise gleichzeitig beim Betätigen des Verbindungselementes erfolgt, über das die Armauflage mit dem Übertragungsglied verbunden wird. Hierzu kann das Verbindungselement beispielsweise über das Distanzelement, welches das Verbindungselement umgibt, auf das elastische Element einwirken.

An der Trägerplatte, auf der der Verstellmechanismus der Armlehne vormontierbar ist, können weiterhin Führungsschienen vorgesehen sein, an denen das Übertragungsglied geführt wird. Zur Aufnahme des Antriebsmotors kann der Träger eine Mulde aufweisen, die den Antrieb zumindest teilweise umgibt. Das Getriebe, welches die Antriebskraft des Motors auf das übertragungsglied überträgt, weist mindestens ein entlang der Führungsschiene bewegbares Getriebeteil auf, welches vorteilhaft in einem von der Führungsschiene umschlossenen Raum angeordnet sein kann. An dem Getriebeteil sind Befestigungsmittel zur Befestigung des Übertragungsgfiedes vorgesehen, welches seinerseits mittels geeigneter Gleiter entlang der Führungsschienen geführt wird. Bei dem Getriebe kann es sich beispielsweise um ein Spindel- oder ein Zahnstangengetriebe handeln, das den Antrieb mit dem Übertragungsglied koppelt.

Ein Verfahren zur Montage einer Armlehnenbaugruppe in einer Kraftfahrzeugtür ist durch die Merkmale des Patentanspruchs 30 charakterisiert.

Danach wird die Armauflage der Armlehnenbaugruppe bezüglich der Türinnenverkleidung in Fahrzeuglängsrichtung und fakultativ zusätzlich in einer zweiten Richtung, senkrecht zur Fahrzeuglängsrichtung sowie senkrecht zur Verstellrichtung der Armauflage justiert.

Die Justage in Fahrzeuglängsrichtung erfolgt dabei vorzugsweise mittels einer hierfür vorgesehenen und sich in dieser Richtung erstreckenden Führung und die Justage in der zweiten Richtung durch Deformation eines hierfür vorgesehenen elastischen Elementes.

Weitere Merkmale und Vorteile der Erfindung werden bei der nachfolgenden Beschreibung eines Ausführungsbeispiels anhand der Figuren deutlich werden.

Es zeigen:
- Fig.1a: - eine perspektivische Darstellung eines Verstellmechanismus für eine Armauflage;
- Fig. 1b-1d: - drei unterschiedliche Ansichten des Verstetimechanismus aus Fig. 1a;
- Fig. 2: - eine erste Abwandlung des Verstellmechanismus aus den Figuren 1a-1d;
- Fig. 3: - eine zweite Abwandlung des Verstellmechanismus aus den Figuren 1a-1d;
- Fig. 4: - eine dritte Abwandlung des Verstellmechanismus aus den Figuren 1a-1d;
- Fig. 5: - eine vierte Abwandlung des Verstellmechanismus aus den Figuren 1a-1d;
- Fig. 6: - ein Ausführunsbeispiel für einen manuellen Antrieb einer höhenverstellbaren Armauflage;
- Fig.7: - eine Abwandlung des Ausführungsbeispiels aus Fig. 6 hinsichtlich des Betätigungselementes des manuellen Antriebes;
- Fig. 8: - einen Schnitt durch einen Befestigungsbereich zwischen einer Armauflage und einem Übertragungsglied der Verstellmechanik;
- Fig. 9a: - einen Querschnitt durch den Befestigungsbereich gemäß Fig. 8;
- Fig. 9b: - eine Abwandlung des Ausführungsbeispiels aus Fig. 9a;
- Fig. 10: - einen Schnitt durch einen Befestigungsbereich gemäß Fig. 9b;
- Fig. 11: - einen Befestigungsbereich in der Umgebung einer Kartentasche einer Kraftfahrzeugtür;
- Fig.12: - ein Detail aus Fig. 7;
- Fiuren 13a und 13b: - zwei verschiedene Ansichten einer Türinnenverkleidung;
- Fig. 14: - die Türinnenverkleidung gemäß den Figuren 13a und 13b mit eingebauter Armauflage.

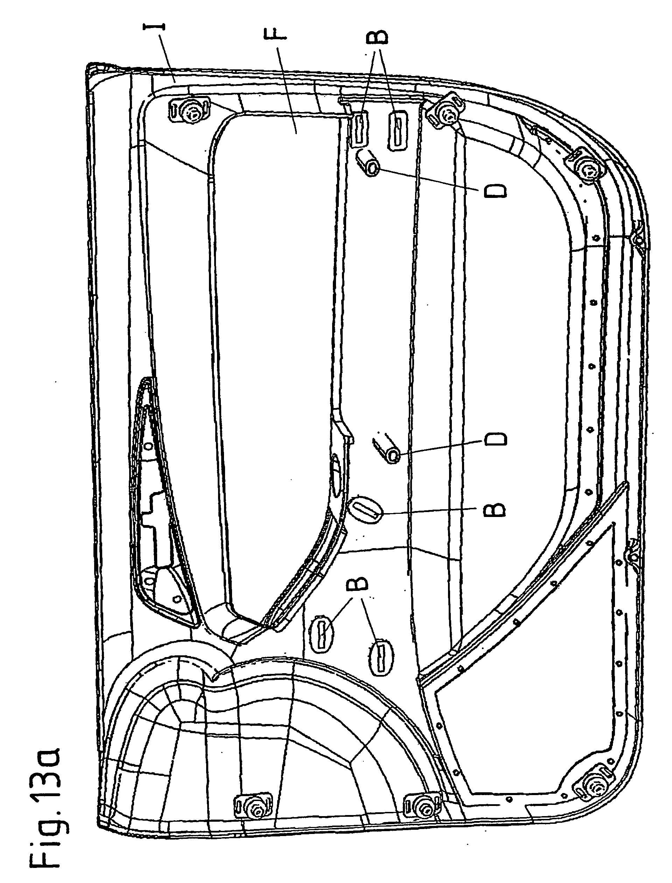

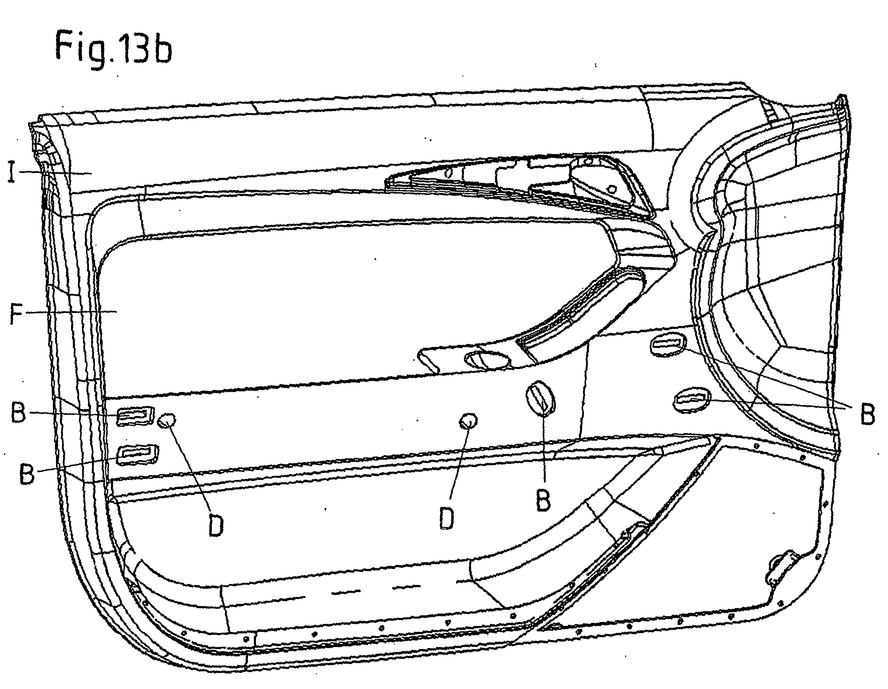

Die Figuren 13a und 13b zeigen eine Rückansicht (vom Türinnenblech her gesehen) beziehungsweise eine Vorderansicht (vom Fahrzeuginnenraum her gesehen) einer Türinnenverkleidung I, mit der das Türinnenblech einer Fahrzeugtür zum Fahrzeuginnenraum hin abgedeckt und verkleidet wird. Die Türinnenverkleidung I weist auf ihrer Rückseite zwei Distanzelemente D auf, die sich mit ihrer der Türinnenverkleidung abgewandten Stirnseite an dem Türinnenblech oder einer mit dem Türinnenblech verbundenen Grundplatte abstützen, wenn die Türinnenverkleidung I am Türinnenblech befestigt ist. Hierdurch wird die Distanz zwischen Türinnenverkleidung und Türinnenblech festgelegt. Die Distanzelemente D sind hohlzylindrisch ausgestaltet, so dass sie von Befestigungsschrauben durchgriffen werden können, die der Befestigung der Türinnenverkleidung am Türinnenblech dienen.

Die Türinnenverkleidung I weist ferner einen Freiraum F auf, der die Montage einer Armauflage gestattet. Unterhalb des Freiraumes F sind Befestigunsstellen B zur Befestigung einer Zierleiste an der Türinnenverkleidung I vorgesehen.

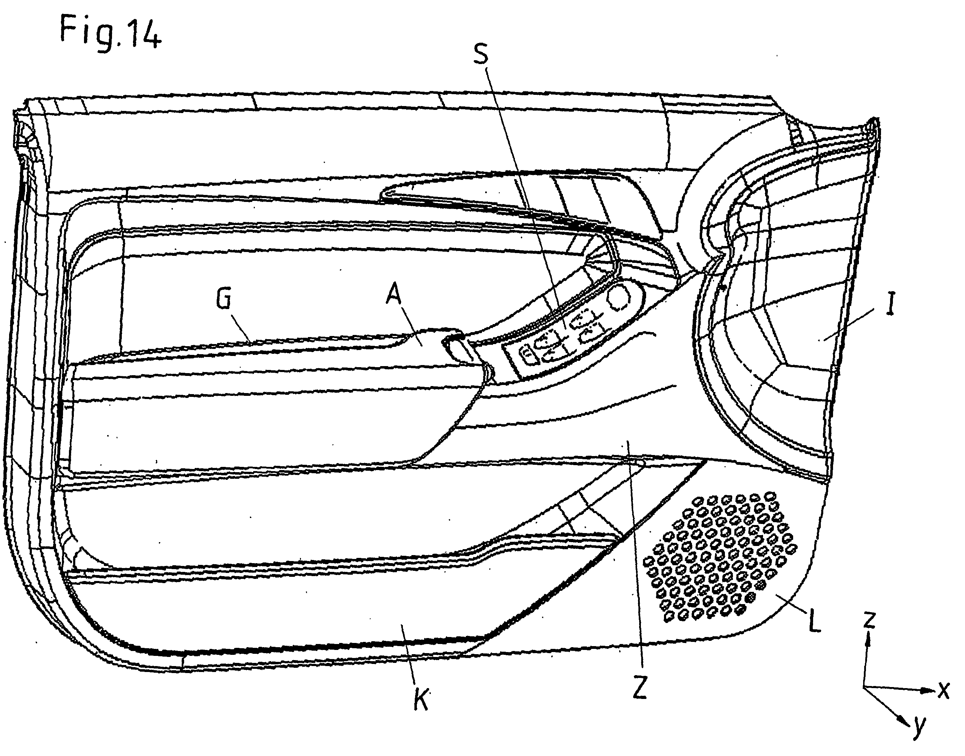

Figur 14 zeigt die Türinnenverkleidung in einer Ansicht gemäß Figur 13b nach Befestigung einer Armlehnenbaugruppe mit einer Armauflage A, die eine Griffmulde G aufweist. Femer ist vor der Armauflage A eine Schalterblock S angeordnet, mit dem elektrische Funktionskomponenten des Fahrzeugs, wie zum Beispiel elektrische Fensterheber oder elektrische Sitzverstelleinrichtungen betätigbar sind.

Unterhalb der Armauflage A ist eine Zierleiste Z an der Türinnenverkleidung I befestigt. Unterhalb der Zierleiste Z befinden sich eine Kartentasche K sowie eine Lautsprecherabdeckung L.

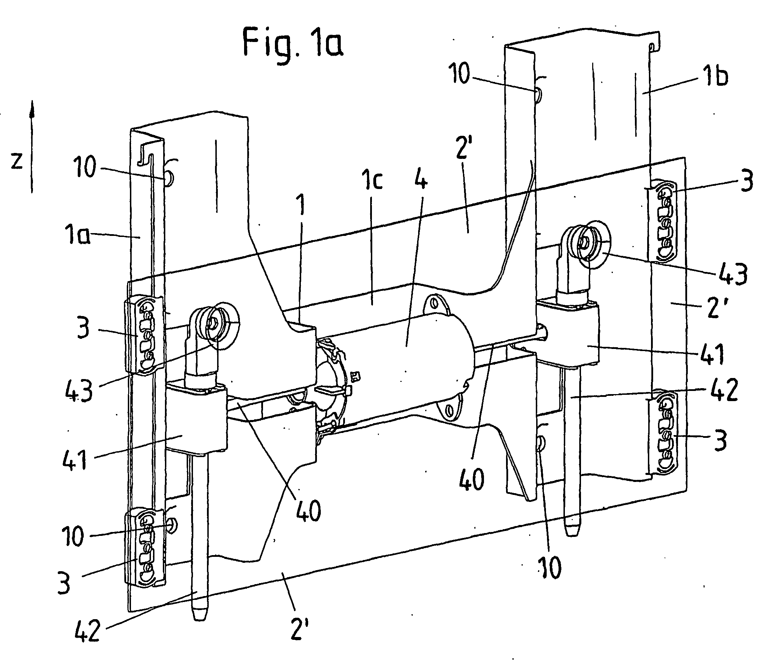

Nachfolgend werden anhand der Figuren 1a bis 12 Einzelheiten der Armlehnenbaugruppe erläutert werden, die eine in der Höhe (entlang der vertikalen Fahrzeugachse z) verstellbare Armauflage A aufweist, sowie Möglichkeiten zur Justierung der Armauflage A bezüglich der Türinnenverkleidung I entlang vorgegebener Richtungen x, y dargestellt werden.

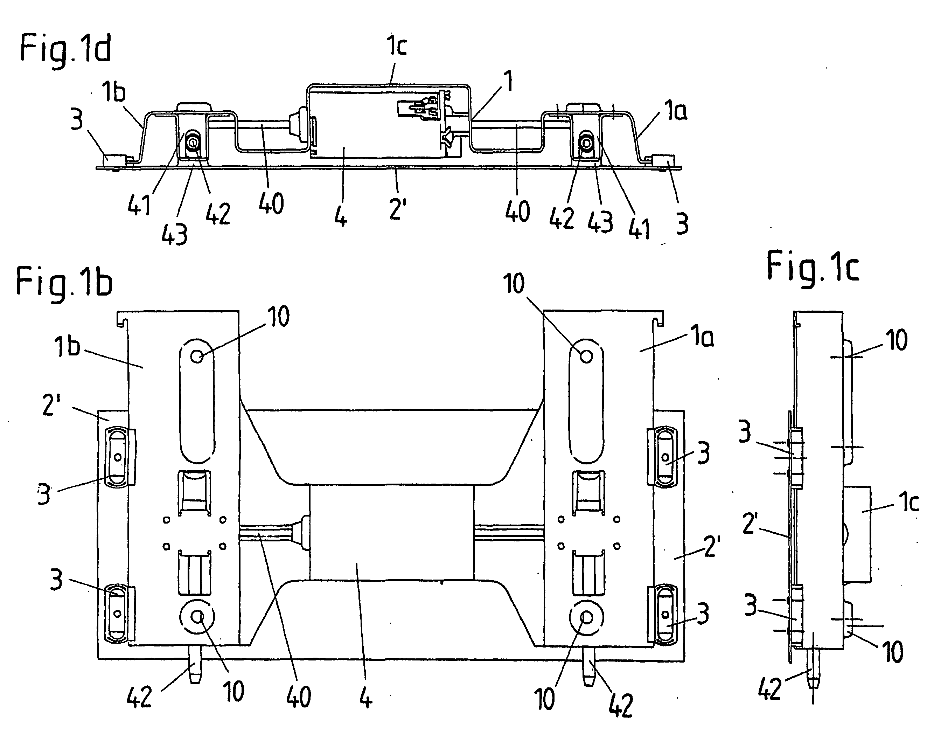

Figur 1a zeigt eine perspektivische Darstellung eines Verstellmechanismus für eine Armauflage als vormontierte Baueinheit, die zum Einsatz in einen Türkasten einer Kraftfahrzeugtür bestimmt ist und über mehrere Befestigungsstellen 10 an dem Türinnenblech oder einer mit diesem verbindbaren Grundplatte (Türmodulträger) befestigt wird. Die Figuren 1b - 1d zeigen die Rückansicht, die Seitenansicht und die Draufsicht der Baueinheit aus Figur 1 a, mit der eine Einstellung der Höhe einer Armauflage im wesentlichen entlang der vertikalen Fahrzeugachse (z-Achse) möglich ist.

Ein einteiliges Basiselement 1, dessen Randbereiche als Führungsschienen 1a, 1b ausgeformt und über einen zur Aufnahme des Motors 4 mehrfach abgewinkelten Steg 1c miteinander verbunden sind, bildet den Träger der Baueinheit. In den Führungsschienen 1a, 1b sind Untersetzungsgetriebe 41 angeordnet, mit denen je eine Spindel 42 entlang der jeweiligen Führungsschiene 1a vertikal verstellbar ist. Die Antriebskraft des Motors 4 wird von je einer Antriebswelle 40 auf die Getriebe 41 übertragen, wobei die Antriebswellen 40 durch einen geschlitzten Bereich des Basiselements 1 bis zum Erreichen ihrer Sollposition einführbar sind.

Eine (in Figur 1a durchscheinend dargestellte) Tragplatte 2', an der die Armauflage zu montieren ist und die als Übertragungsglied zur Übertragung einer Verstellbewegung der Spindel auf die Armauflage dient, wird mittels Gleitern 3 entlang des Verstellweges an den Führungsschienen 1a, 1b geführt. Die Einleitung der Verstellkraft von den Spindeln 42 in die Tragplatte 2' erfolgt über Befestigungsstellen 43.

Wenn stabile Führungsbedingungen entlang des Verstellweges sichergestellt sind, kann die Verstellung auch von nur einer etwa mittig zwischen den Führungsschienen 1a, 1b angeordneten Spindel übernommen werden. Anstatt einer Spindel kann alternativ auch eine Zahnstangen-Ritzel-Kombination zur Anwendung kommen.

Die beschriebene Konstruktion zeichnet sich durch eine hohe Steifigkeit, die Vorprüfbarkeit aller Funktionsparameter des Verstellmechanismus außerhalb der Fahrzeugtür und - infolge des symmetrischen Aufbaus - durch die Verwendbarkeit für linke und rechte Türen aus. Darüber hinaus gewährteistet die im eingebauten Zustand nach innen (in Richtung auf den Fahrzeuginnenraum) weisende Tragplatte 2', welche die Bauteile der Verstellmechanik abdeckt, daß im Falle eines Seitencrashs einem Eindringen von scharfen Kanten und dergleichen entgegengewirkt wird. Dementsprechend sollte der Verstellmechanismus so tief wie möglich in der Tür angeordnet werden.

Wenn das entsprechende Fahrzeug mit einer elektronischen Memory-Einrichtung zum Anfahren gespeicherter Einstellparameter ausgestattet ist, so können hiermit - neben den Positionen für den Sitz, die Spiegel und das Lenkrad - auch verschiedene Positionen der Armlehne automatisch angefahren werden. Sollte darüber hinaus die Verstellung der Armlehne unter Verwendung eines mit einem Einklemmschutz versehenen Fensterheberantriebs erfolgen, kann bei Bedarf ohne weiteres mit der selben Elektronik auch für die Armlehnenverstellung ein Einklemmschutz auf kostengünstige Weise realisiert werden. Ein Bedarf hierfür kann insbesondere entstehen, wenn sich beim Absenken der Armauflage ein Spalt verringert (z.B. zum oberen Rand eines Ablagefaches), dessen Abmessungen zum Einklemmen von Körperteilen geeignet sind.

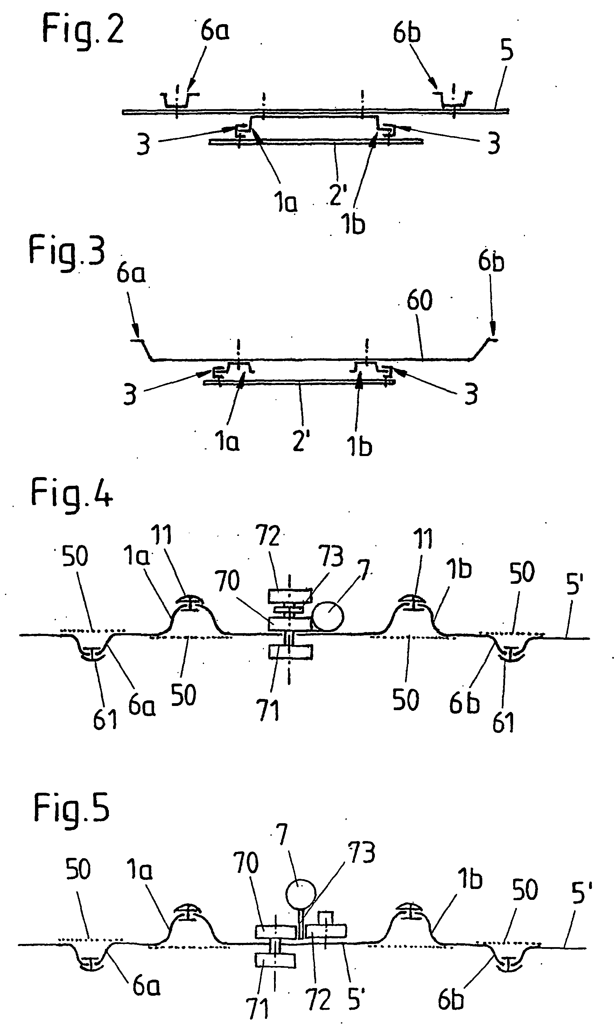

In den Figuren 2 bis 5 werden verschiedene Abwandlungen des Ausführungsbeispiels aus den Figuren 1a bis 1d dargestellt, wobei für übereinstimmende Bauteile und Baugruppen jeweils die gleichen Bezugszeichen verwendet werden wie in den Figuren 1a bis 1d. Für die nähere Erläuterung dieser Bauteile und Baugruppen wird jeweils auf die Ausführungen zu den Figuren 1a bis 1d verwiesen.

Die schematische Darstellung von Figur 2 zeigt einen Verstellmechanismus 1a, 1b, 2', 3 für eine Armauflage, der beispielsweise der Bauart gemäß den Figuren 1a - 1d entsprechen kann und der an einer Grundplatte 5 einer Fahrzeugtür (Türmodulträger) montiert ist. Auf der dem Verstellmechanismus 1a, 1b, 2', 3 abgewandten Seite der Grundplatte 5, die zur feuchtigkeitsdichten Abdeckung einer großflächigen Montageöffnung in der Innenhaut eines Türkastens vorgesehen ist, erstrecken sich zwei Führungsschienen 6a, 6b eines Seilfensterhebers. Der auf einem Basiselement 1 (vergl. Figuren 1a bis 1d) zu einer vormontierbaren und vorprüfbaren Baueinheit zusammengefasste Verstellmechanismus wird hierdurch in ein größeres, auf einer Grundplatte 5 angeordnetes Türmodul integriert.

Gemäß der schematischen Darstellung von Figur 3 sind die Randbereiche eines plattenförmigen Basiselementes 60 des Verstellmechanismus 1a, 1b, 2', 3 selbst zu Führungsschienen für einen Fensterheber ausgeformt. Die Tragplatte 2' der Armlehnenverstellung wird über Mitnehmer 3 an separaten Führungsschienen 1a, 1b geführt, die an dem Basiselement 60 des Verstellmechanismus befestigt sind.

Ein noch höherer Integrationsgrad wird gemäß den Ausführungsbeispielen der Figuren 4 und 5 erreicht. Hier sind sowohl die Führungsschienen 6a, 6b eines Seilfensterhebers als auch die Führungsschienen 1a, 1b der Armlehnenverstellung einstückig in einen Träger 5' integriert, der sowohl das Basiselement des Verstellmechanismus für eine Armauflage als auch die Grundplatte eines größeren Türmodules (welches zusätzlich einen Fensterheber umfasst) bildet. Die Führungsschienen 1a, 1b, 6a, 6b sind durch wechselseitig vorstehende Wölbungen gebildet, die Schlitze zur Aufnahme und zur Führung von Mitnehmem 11, 61 aufweisen.

Um eine wirksame Naß-/Trockenraumtrennung in einer Fahrzeugtür durch den Träger 5' gewährleisten zu können, müssen die Schlitze der Führungsschienen abgedichtet werden. Die kann in einfacher Weise durch ein Klebeband 50 erfolgen, das auf die Basisfläche des Trägers 5' derart geklebt wird, daß der Bereich der Wölbung abgedeckt ist.

Ein gemeinsamer Motor für beide Verstelleinrichtungen reduziert den Materialaufwand weiter, was Gewicht und Kosten spart. Gemäß der schematischen Darstellung von Figur 4 sind die Achsen eines Getriebes 70 für den Fensterheber und eines Getriebes 72 für die Armlehnenverstellung koaxial angeordnet. Ein Motor 7 ist direkt mit dem Getriebe 70 des Fensterhebers gekoppelt, über das die Verstellkraft an eine Seiltrommel 71 weitergeleitet werden kann, wenn eine zugeordnete Kupplung 73 nicht aktiviert ist. Bei Aktivierung der Kupplung 73 wird der Kraftfluß zur Seiltrommel 71 unterbrochen und statt dessen an das Getriebe 72 für die Armlehnenverstellung weitergeleitet. Die Durchleitung der Verstellkraft durch das Getriebe 70 des Fensterhebers hat den Vorteil, daß der Aufwand für das Untersetzungsgetriebe 72 der Armlehnenverstellung erheblich reduziert werden kann. Die Verstellgeschwindigkeit der Armauflage wird mit 2 - 3 cm pro Sekunde im allgemeinen deutlich unter der Verstellgeschwindigkeit der Fensterscheibe liegen.

Entsprechend der schematischen Darstellung von Figur 5 verlaufen die Achsen der beiden Getriebe 70 und 72 parallel. Mittels der Kupplung 73 wird die Antriebskraft des Motors je nach Bedarf der einen oder der anderen Verstellvorrichtung zugeführt. Eine Mehrfachnutzung von Getriebestufen ist hier nicht vorgesehen.

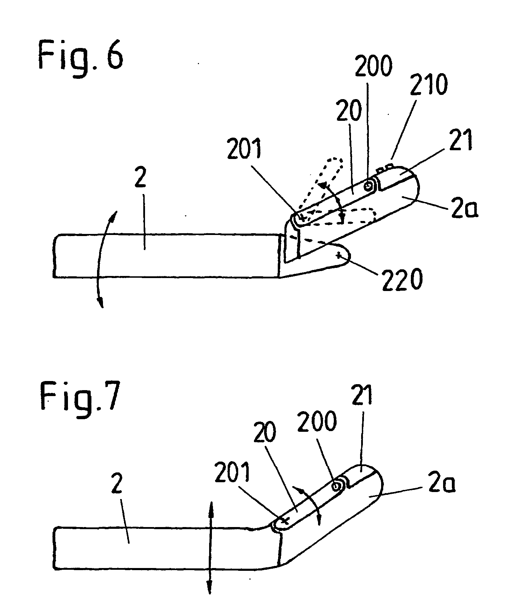

In Figur 6 ist eine um eine Achse 220 schwenkbar aufgehängte Armauflage 2 (Armstütze) dargestellt, die unabhängig von einem fest in einer Tür eingebauten Griffteil 2a manuell eingestellt werden kann. Als Antriebshebel fungiert ein um einer weitere Achse 201 begrenzt schwenkbare Zuziehgriff 20, der über diese Achse 201 mit einem sogenannten (nicht dargestellten) Schrittschaltwerk in Wirkverbindung steht. Zu Aufbau und Funktion von Schrittschaltwerken siehe beispielsweise DE 41 20 617 C2 und DE 43 21 335 C2.

Wird keine Verstellung der Armlehne vorgenommen, so befindet sich der Zuziehgriff 20 in einer neutralen Nullpunktlage (durchgezogene Linie), die verriegelt sein sollte, um ungewollte Verstellbewegungen zu vermeiden. Um eine Einstellung der Armlehnenneigung bzw. -höhe vornehmen zu können, wird zunächst ein Entriegelungsknopf 200 gedrückt und dann der Zuziehgriff nach unten geschwenkt, um die Armtehnen abzusenken, bzw. nach oben geschwenkt, um die Armlehne anzuheben. Eine (nicht dargestellte) Rückholfeder kann dafür sorgen, daß der Zuziehgriff selbsttätig in seine Nullpunktlage zurückkehrt, in der er mit einem Schalter 210 tragenden Schalterblock 21 eine einheitliche Kontur bildet.

Die schematische Darstellung von Figur 7 unterscheidet sich von dem Ausführungsbeispiel aus Figur 6 lediglich dadurch, daß das Griffteil 2a und die Armlehne eine gemeinsam verstellbare Einheit bilden.

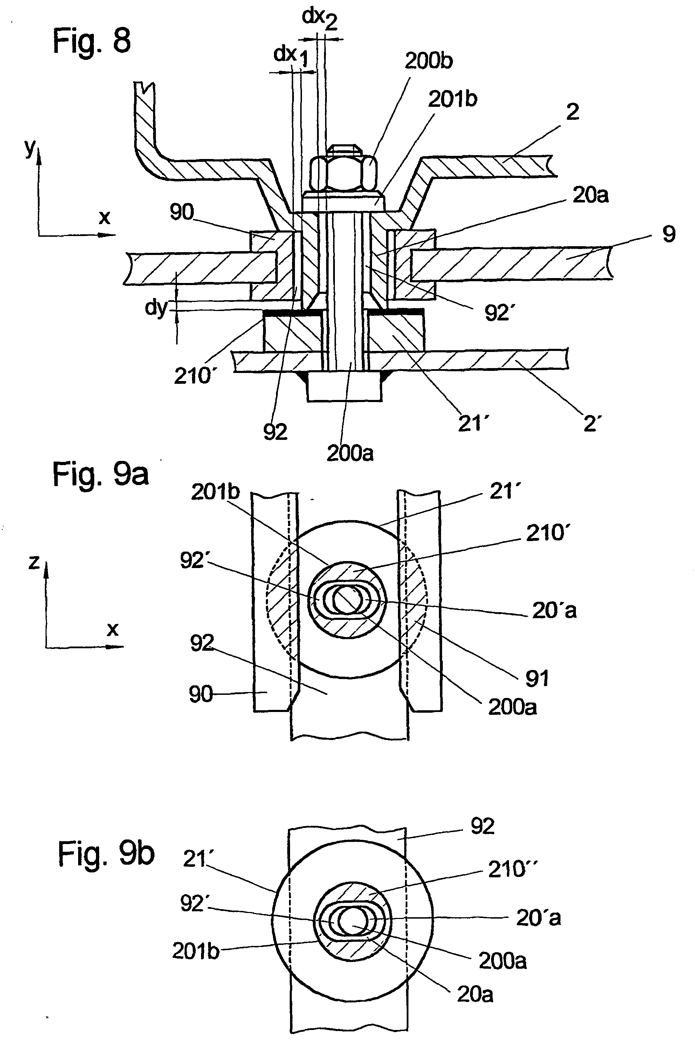

Figur 8 zeigt einen Querschnitt durch einen Befestigungsbereich zwischen einer Armauflage 2 und der zugeordneten Tragplatte 2' der Verstellmechanik. Danach ist an der Armauflage 2 einstückig ein Distanzelement in Form einer Distanzhülse 20a angeformt, deren freies Ende sich an einem vorzugsweise federelastischen weiteres Distanzelement 21' mit aufgesetzter Metallscheibe 210' abstützt, welches wiederum auf der Tragplatte 2' angeordnet ist. Die zur Befestigung der Armauflage 2 an deren Tragplatte 2' erforderliche Verbindungskraft wird von einem Gewindebolzen 200a aufgebracht, der die Distanzhülse 20a, das weitere, elastische Distanzelement 21' und die Tragplatte 2' durchgreift und zusammen mit einer zugeordneten Mutter 200b kraftschlüssig gegeneinander verspannt. Das elastische Distanzelement 21' dient zur Schaffung einer klapperfreien Distanz zwischen der Verstellmechanik, insbesondere der Tragplatte 2' der Armauflage 2 und der Türinnenverkleidung 9 und kann ggf. auch einstückig an der Tragplatte 2' ausgebildet sein.

Zwischen der Armauflage 2 und der Tragplatte 2', die bei einer Einstellung der Höhe der Armauflage 2 gemeinsam bewegt werden, erstreckt sich eine Türinnenverkleidung 9, die einen sich in Verstellrichtung z entlang des gesamten Verstellweges der Armauflage 2 erstreckenden Schlitz 92 aufweist, in dem die Distanzhülse 20a und der Gewindebolzen 200a in Verstellrichtung z der Armauflage 2 geführt sind und dessen Rand mit einem ein Gleitelement 90 bildenden Rahmen versehen ist. Um Schwergängigkeiten zu vermeiden, ist die Distanzhülse 20a so ausgelegt, daß der Rand der Innenverkleidung 9 bzw. das darauf aufgesetzte Gleitelement 90 nicht zwischen dem Befestigungsbereich der Armlehne 2 und dem elastischen Distanzelement 21' bzw. der Tragplatte 2' eingeklemmt werden.

Da das weitere Distanzelement 21' elastisch als Federelement (z.B. als Tellerfeder) oder dergleichen (z.B. als Gummiblock) ausgeführt ist, kann durch Einwirkung auf das Distanzelement 21' mittels des Gewindebolzens 200a über die Distanzhülse 20a in einer Richtung y quer zur Verstellrichtung z der Armauflage 2 und quer zur Fahrzeuglängsrichtung x sowohl ein hinreichender Abstand zwischen der Türinnenverkleidung 9 und der Tragplatte 2' gewährleistet werden als auch ein Mittel zur türspezifischen Positionierung des der Befestigung an der Tragplatte 2' dienenden Bereiches der Armauflage 2 in Bezug auf den Rand 90 des Schlitzes 92 in der Innenverkleidung 9 bereitgestellt werden. Beim Festziehen des Schraubenbolzens 200a und der zugeordneten Mutter 200b wird das federelastische Distanzelement 21' durch Einwirkung der Distanzhülse 20a, in die von der Mutter 200b über eine Scheibe 201b Kräfte eingeleitet werden, mehr und mehr komprimiert, bis die Armauflage 2 und die Tragplatte 2' in Bezug auf die Innenverkleidung 9 die gewünschte Position erreicht haben, insbesondere das Spiel dy, mit dem die Türinnenverkleidung 9 bzw. deren Gleitelement 90 zwischen der Armauflage 2 und der Tragplatte 2' geführt ist, auf einen gewünschten Wert eingestellt ist, der eine weitgehend reibungsfreie Bewegung von Armauflage 2 und Tragplatte 2' relativ zu der Türinnenverkleidung entlang der Verstellrichtung z gestattet (vergl. auch Fig. 9a) und andererseits die Spaltmaße so weit minimiert, dass für einen Fahrzeuginsassen möglichst keine Spalte zwischen Armauflage 2 und Türinnenverkleidung 9 sichtbar sind. Das Spiel dy ist in Figur 8 exemplarisch zwischen der elastischen Distanzhülse 21' bzw. der darauf befindlichen Metallscheibe 210 und dem Gleitelement 90 der Türinnenverkleidung 9 eingezeichnet. Tatsächlich repräsentiert dy das gesamte Spiel, mit dem das Gleitelement 90 zwischen der elastischen Distanzhülse 21' und dem Befestigungsbereich der Armauflage 2 angeordnet ist. Nach Einstellung der Position der Armauflage 2 durch Komprimieren des elastischen Distanzelementes 21' verbleibt ein kleiner, für einen Insassen (und auch in Figur 8) nicht erkennbarer Spalt zwischen dem Befestigungsbereich der Armlehne 2 und dem Gleitelement 90, um eine übermäßige Reibung beim Verstellen der Armauflage entlang des Schlitzes 92 in Verstellrichtung z zu vermeiden.

Darüber hinaus besitzt die Distanzhülse 20a gemäß Figur 9a den Querschnitt eines sich in Fahrzeuglängsrichtung x erstreckenden Langlochs 20'a, das der Gewindebolzen 200a durchgreift, und schafft so mittels einer durch das Langloch gebildeten Führung 92' die Möglichkeit eines Toleranzausgleichs zwischen Armauflage 2 und Tragplatte 2' (und somit auch zwischen Armauflage 2 und Türinnenverkleidung 9) um einen vorgegebenen Betrag 2*dx2 in Fahrzeuglängsrichtung x (Fahrtrichtung). Ferner ist die Distanzhülse mit einem definierten Spiel 2*dx1 bezüglich der Fahrzeuglängsrichtung x in dem Spalt 92 der Türinnenverkleidung 9 geführt, so dass die Armauflage 2 und die Tragplatte 2' außerdem gemeinsam in Fahrzeuglängsrichtung x bezüglich der Türinnenverkleidung justiert werden können.

Die in Fig. 9a schraffierten Bereiche stellen die Stützflächen 91 und 210' zwischen dem randseitigen Gleitelement 90 und der Armlehne 2 bzw. dem Distanzelement 21' einerseits sowie zwischen der Distanzbuchse 20a und dem Distanzelement 21' andererseits dar.

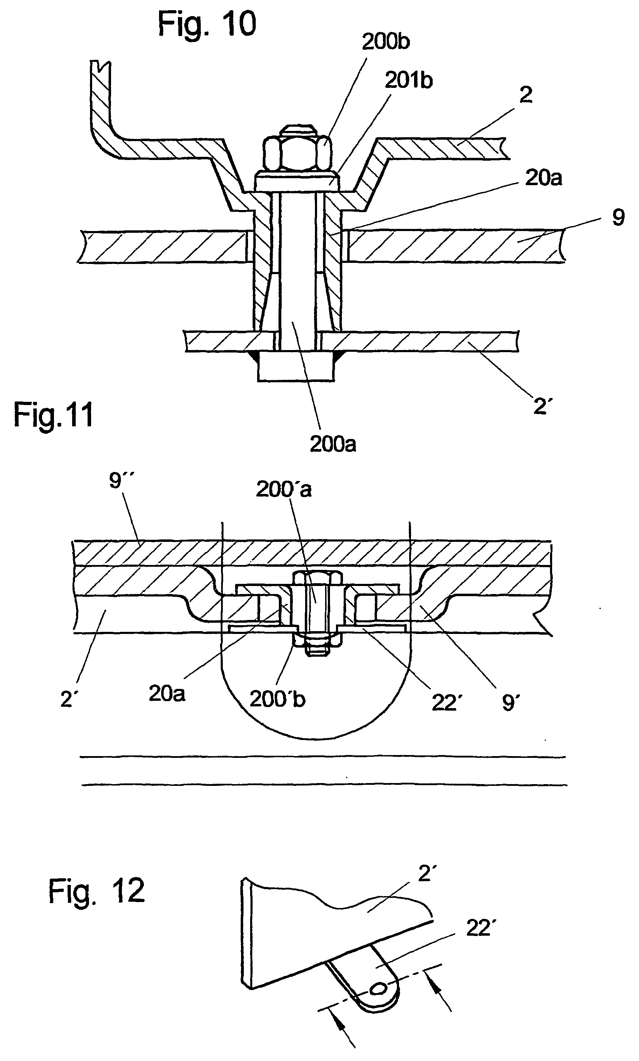

In der Regel sind zur Verbindung von Armauflage 2 und Tragplatte 2' zwei entlang des Führungsschlitzes 92 in Verstellrichtung z übereinander angeordnete Befestigungs- und Führungsbereiche vorgesehen. Der untere der zwei übereinander liegenden Befestigungs- und Führungsbereiche, der im allgemeinen der Inaugenscheinnahme durch einen Fahrzeuginsassen entzogen ist, kann zur Einsparung von Kosten einfacher ausgeführt werden, wie in Figur 10 zusammen mit der zugehörigeren Darstellung gemäß Figur 9b angedeutet. Die Führung der Armauflage 2 in dem Führungsschlitz 92 durch den oberen Befestigungsbereich, wie in Figur 8 und 9a dargestellt, ist in der Regel so präzise, dass im unteren Befestigungsbereich zur Führung der Armauflage in dem Führungsschlitz 92 auf die Gleitelemente 90 und das Distanzelement 21' verzichtet werden kann. Die einstückig an der Armauflage 2 angeformte Distanzhülse 20a stützt sich dann über einen in Fig. 9b schraffiert dargestellten Bereich 210" direkt an der Tragplatte 2' ab.

Figur 11 zeigt einen Schnitt durch einen Befestigungsbereich zwischen der Türinnenverkleidung im Bereich einer Kartentasche 9', 9" und einer von der Tragplatte 2' der Armlehne abgewinkelten Befestigungslasche 22', vergl. die perspektivische Darstellung eines Ausschnittes der Tragplatte 2' in Fig. 12. Auch hier ist eine Schraubverbindung 200'a, 200'b mit einer Distanzbuchse 20a vorgesehen, die in eine vergleichsweise größere Öffnung der Innenverkleidung eingesetzt wird, um hinreichend viel Spielraum für einen Toleranzausgleich zwischen der Innenverkleidung 9 und der Verstellmechanik bzw. deren Tragplatte 2' zu gewährleisten.

## Patentansprüche

1. Armlehnenbaugruppe für eine eine Türinnenverkleidung aufweisende Kraftfahrzeugtür. mit
- einer durch einen Antrieb (4) in ihrer Lage verstellbaren Armauflage (2) und
- einem bei Aktivierung des Antriebs (4) entlang einer Verstellrichtung (z) der Armauflage (2) bewegbaren Übertragungsglied (2'), mit dem die Armauflage (2) verbindbar ist,
**dadurch gekennzeichnet,**
**dass** die Position der Armauflage (2) in der Kraftfahrzeugtür zum Toleranzausgleich in Fahrzeuglängsrichtung (x) durch Justage einstellbar ist, so dass die Armauflage (2) in Fahrzeuglängsrichtung (x) eine definierte Position bezüglich der Türinnenverkleidung (9) einnimmt.

2. Armlehnenbaugruppe nach Anspruch 1, **dadurch gekennzeichnet, dass** der Antrieb (4) und das Übertragungsglied (2') als Verstellmechanismus auf einem gemeinsamen Träger (1) angeordnet sind, der an einem tragenden Teil (5) einer Kraftfahrzeugtür befestigbar ist.

3. Armlehnenbaugruppe nach Anspruch 2, **dadurch gekennzeichnet, dass** der Antrieb (4) und das Übertragungsglied (2') auf dem Träger (1) eine vorprüfbare Baueinheit bilden, die bei Aktivierung des Antriebs (4) eine Verstellbewegung des Übertragungsgliedes (2') erzeugt.

4. Armlehnenbaugruppe nach einem der vorhergehenden Ansprüche, **dadurch gekennzeichnet, dass** die Einstellung der Position der Armauflage in einer Fahrzeugtür derart erfolgt, dass sich die Armauflage (2) entlang ihrer Verstellrichtung (z) verstellen lässt, ohne dass die Armauflage (2) bei der Verstellbewegung eine Wölbung der Türinnenverkleidung (9) erzeugt.

5. Armlehnenbaugruppe nach einem der vorhergehenden Ansprüche, **dadurch gekennzeichnet, dass** zur Ausrichtung der Armauflage (2) in Fahrzeuglängsrichtung (x) mindestens eine Führung (92, 92') vorgesehen ist, die vorzugsweise gleichzeitig zur Führung der Armauflage (2) entlang der Verstellrichtung (z) dient.

6. Armlehnenbaugruppe nach Anspruch 5, **dadurch gekennzeichnet, dass** die Armauflage (2) mit einem Führungselement (20a) in die Führung (92, 92') eingreift.

7. Armlehnenbaugruppe nach einem der vorhergehenden Ansprüche, **dadurch gekennzeichnet, dass** die Armauflage (2) über mindestens ein Verbindungselement (200a, 200b) mit dem Übertragungsglied (2') verbunden ist, das in mindestens einer Führung (92, 92') in Fahrzeuglängsrichtung (x) bewegbar ist.

8. Armlehnenbaugruppe nach Anspruch 7, **dadurch gekennzeichnet, dass** sich das Verbindungselement (200a, 200b) in einem Distanzelement (20a) erstreckt, das mit der Armauflage (2) verbunden ist und vorzugsweise gemeinsam mit dem Verbindungselement (200a, 200b) in der Führung (92) bewegbar ist.

9. Armlehnenbaugruppe nach Anspruch 8, **dadurch gekennzeichnet, dass** das Distanzelement (20a) einstückig an der Armauflage (2) angeformt ist.

10. Armlehnenbaugruppe nach Anspruch 8 oder 9, **dadurch gekennzeichnet, dass** das Verbindungselement (200a, 200b) in dem Distanzelement (20a) in Fahrzeuglängsrichtung (x) bewegbar ist.

11. Armlehnenbaugruppe nach einem der Ansprüche 5 bis 10, **dadurch gekennzeichnet, dass** der Rand der Führung (92) mit einem Führungsrahmen (90) versehen ist.

12. Armlehnenbaugruppe nach einem der Ansprüche 5 bis 11, **dadurch gekennzeichnet, dass** die Führung (90) in der Türinnenverkleidung (9) vorgesehen ist.

13. Armlehnenbaugruppe nach einem der Ansprüche 5 bis 12, **dadurch gekennzeichnet, dass** sich die Führung (90) zwischen dem Übertragungsglied (2') und der Armauflage (2) erstreckt.

14. Armlehnenbaugruppe nach einem der vorhergehenden Ansprüche, **dadurch gekennzeichnet, dass** das Übertragungsglied (2') einerseits und die Armauflage (2) andererseits beidseits der Türinnenverkleidung (9) der Fahrzeugtür angeordnet sind.

15. Armlehnenbaugruppe nach einem der vorhergehenden Ansprüche, **dadurch gekennzeichnet, dass** die Position der Armauflage (2) in der Kraftfahrzeugtür zum Toleranzausgleich zusätzlich in einer Richtung (y) senkrecht zur Fahrzeuglängsrichtung (x) und senkrecht zur Verstellrichtung (z) der Armauflage (2) einstellbar ist.

16. Armlehnenbaugruppe nach Anspruch 15, **dadurch gekennzeichnet, dass** zur Ausrichtung der Armauflage (2) in der zweiten Richtung (y) senkrecht zur Fahrzeuglängsrichtung (x) und senkrecht zur Verstellrichtung (z) der Armauflage (2) ein elastisches Element (21') dient, wobei durch Deformation des elastischen Elementes (21') der Abstand zwischen der Armauflage (2) und/oder dem Übertragungsglied (2') einerseits und der Türinnenverkleidung (9) andererseits einstellbar ist.

17. Armlehnenbaugruppe nach Anspruch 16, **dadurch gekennzeichnet, dass** das elastische Element (21') zwischen einer Türinnenverkleidung (9) einerseits und der Armauflage (2) oder dem Übertragungsglied (2') andererseits angeordnet ist.

18. Armlehnenbaugruppe nach Anspruch 16 bis 17, **dadurch gekennzeichnet, dass** durch Betätigung eines Verbindungselementes (200a, 200b), mit dem die Armauflage (2) mit dem Übertragungsglied (2') verbindbar ist, das elastische Element (21') deformiert wird.

19. Armlehnenbaugruppe nach Anspruch 18, **dadurch gekennzeichnet, dass** das Verbindungselement (200a, 200b) über ein Distanzelement (20a) auf das elastische Element (21') einwirkt, welches das Verbindungselement (200a, 200b) umgibt.

20. Armlehnenbaugruppe nach einem der Ansprüche 2 bis 19, **dadurch gekennzeichnet, dass** der Träger (1) mindestens eine Führungsschiene (1a, 1b) aufweist, an der das Übertragungsglied (2') geführt ist.

21. Armlehnenbaugruppe nach Anspruch 20, **dadurch gekennzeichnet, dass** an der Führungsschiene (1a, 1b) Gleitmittel (3) zur Führung des Übertragungsgliedes (2') vorgesehen sind.

22. Armlehnenbaugruppe nach Anspruch 20 oder 21, **dadurch gekennzeichnet, dass** zwei Führungsschienen (1a, 1b) vorgesehen sind, die sich jeweils in Verstellrichtung (z) der Armauflage (2) erstrecken.

23. Armlehnenbaugruppe nach einem der Ansprüche 2 bis 22, **dadurch gekennzeichnet, dass** der Träger (1 ) eine Aufnahme (1 c) für den Antrieb (4) aufweist.

24. Armlehnenbaugruppe nach Anspruch 23, **dadurch gekennzeichnet, dass** die Aufnahme (1c) den Antrieb (4) teilweise umschließt.

25. Armlehnenbaugruppe nach einem der vorhergehenden Ansprüche, **dadurch gekennzeichnet, dass** ein dem Antrieb (4) nachgeordnetes Getriebe (41, 42, 43) mindestens ein in Verstellrichtung (z) der Armauflage (2) bewegbares Getriebeteil (42) aufweist.

26. Armlehnenbaugruppe nach Anspruch 25, **dadurch gekennzeichnet, dass** das Getriebeteil (42) entlang einer Führungsschiene (1a, 1b) bewegbar ist.

27. Armlehnenbaugruppe nach Anspruch 26, **dadurch gekennzeichnet, dass** das Getriebeteil (42) entlang der Führungsschiene (1a, 1b) geführt wird und vorzugsweise in der Führungsschiene (1a, 1b) angeordnet ist.

28. Armlehnenbaugruppe nach einem der Ansprüche 25 bis 27, **dadurch gekennzeichnet, dass** an dem Getriebeteil (42) Befestigungsmittel (43) zur Befestigung des Übertragungsgliedes (2') vorgesehen sind.

29. Armlehnenbaugruppe nach einem der Ansprüche 25 bis 28, **dadurch gekennzeichnet, dass** das Getriebe (41, 42) als Spindel- oder als Zahnstangengetriebe ausgebildet ist.

30. Verfahren zur Montage einer Armlehnenbaugruppe mit einer verstellbaren Armauflage nach einem der vorhergehenden Ansprüche in einer Kraftfahrzeugtür, wobei die Armauflage (2) bezüglich einer Türinnenverkleidung (9) der Kraftfahrzeugtür in Fahrzeuglängsrichtung (x) justiert wird, so dass die Armauflage (2) in Fahrzeuglängsrichtung (x) eine definierte Position bezüglich der Türinnenverkleidung (9) einnimmt.

31. Verfahren nach Anspruch 30, **dadurch gekennzeichnet, dass** die Ausrichtung der Armauflage (2) in Fahrzeuglängsrichtung (x) mittels einer Führung (92, 92') erfolgt.

32. Verfahren nach Anspruch 30 oder 31, **dadurch gekennzeichnet, dass** die Position der Armauflage (2) bezüglich der Türinnenverkleidung (9) zusätzlich in einer Richtung (y) senkrecht zur Fahrzeuglängsrichtung (x) und senkrecht zur Verstellrichtung (z) der Armauflage justiert wird.

33. Verfahren nach Anspruch 32 oder 31, **dadurch gekennzeichnet, dass** die Ausrichtung der Armauflage (2) in der zweiten Richtung (y) durch Deformation eines elastischen Elementes (21') erfolgt.

## Claims

1. Armrest assembly for a motor vehicle door having a door inner trim panel, with
- an armrest (2) adjustable in position through a drive unit (4), and
- a transfer member (2') to which the armrest (2) is connectable and which can be moved along an adjusting direction (z) of the armrest (2) when the drive unit (4) is activated,
**characterised in that**
the position of the armrest (2) in the vehicle door for the purpose of taking up tolerances can be set by adjustment, so that the armrest(2) takes up a specific position in the vehicle longitudinal direction (x) in relation to the door inner trim panel.

2. Armrest assembly according to claim 1, **characterised in that** the drive unit (4) and the transfer member (2') are mounted as an adjusting mechanism on a common support (1) which is fixable on a supporting part (5) of a vehicle door.

3. Armrest assembly according to claim 2, **characterised in that** the drive unit (4) and transfer member (2') on the support (1) form one pre-checkable structural unit which when the drive unit (4) is activated generates an adjusting movement of the transfer member (2').

4. Armrest assembly according to one of the preceding claims, **characterised in that** the adjustment of the position of the armrest in the vehicle door is carried out so that the armrest (2) can be moved along its adjusting direction (z) without the armrest (2) causing the inner door trim panel (9) to bulge during the adjusting movement.

5. Armrest assembly according to one of the preceding claims, **characterised in that** in order to align the armrest (2) in the vehicle longitudinal direction (x) there is at least one guide (92, 92') which preferably serves at the same time to guide the armrest (2) along the adjusting direction (z).

6. Armrest assembly according to claim 5, **characterised in that** the armrest (2) engages with a guide element (20a) in the guide (92, 92').

7. Armrest assembly according to one of the preceding claims, **characterised in that** the armrest (2) is connected through at least one connecting element (200a, 200b) to the transfer member (2') which is movable in at least one guide (92, 92') in the vehicle longitudinal direction (x).

8. Armrest assembly according to claim 7, **characterised in that** the connecting element (200a, 200b) extends in a spacer element (20a) which is connected to the armrest (2) and is movable preferably together with the connecting element (200a, 200b) in the guide (92).

9. Armrest assembly according to claim 8, **characterised in that** the spacer element (20a) is moulded in one piece on the armrest (2).

10. Armrest assembly according to claim 8 or 9, **characterised in that** the connecting element (200a, 200b) is movable in the spacer element (20a) in the vehicle longitudinal direction (x).

11. Armrest assembly according to one of claims 5 to 10, **characterised in that** the edge of the guide (92) is provided with a guide frame (90).

12. Armrest assembly according to one of claims 5 to 11, **characterised in that** the guide (90) is provided in an inner door trim panel (9).

13. Armrest assembly according to one of claims 5 to 12, **characterised in that** the guide (90) extends between the transfer member (2') and the armrest (2).

14. Armrest assembly according to one of the preceding claims, **characterised in that** the transfer member (2') on the one side and the armrest (2) on the other are mounted either side of an inner door trim panel (9) of the vehicle door.

15. Armrest assembly according to one of the preceding claims, **characterised in that** the position of the armrest (2) in the vehicle door for the purposes of taking up tolerances is also adjustable in a direction (y) at right angles to the vehicle longitudinal direction (x) and perpendicular to the adjusting direction (z) of the armrest (2).

16. Armrest assembly according to claim 15, **characterised in that** an elastic element (21') serves to align the armrest (2) in the second direction (y) perpendicular to the vehicle longitudinal direction (x) and perpendicular to the adjusting direction (z) of the armrest (2), whereby through deformation of the elastic element (21') the distance between the armrest (2) and/or the transfer member (2') on the one hand and the door inner trim panel on the other hand is adjustable.

17. Armrest assembly according to claim 16, **characterised in that** the elastic element (21') is arranged between a door inner trim panel on one side and the armrest or the transfer member on the other side.

18. Armrest assembly according to one of claims 15 to 17, **characterised in that** the elastic element (21') is deformed by actuating a connecting element (200a, 200b) through which the armrest (2) is connectable to the transfer member (2').

19. Armrest assembly according to claim 18, **characterised in that** the connecting element (200a, 200b) acts through a spacer element (20a) on the elastic element (21') which encompasses the connecting element (200a, 200b).

20. Armrest assembly according to one of claims 2 to 19, **characterised in that** the support (1) has at least one guide rail (1a, 1b) on which the transfer member (2') is guided.

21. Armrest assembly according to claim 20, **characterised in that** slide means (3) are provided on the guide rail (1a, 1b) for guiding the transfer member (2').

22. Armrest assembly according to claim 20 or 21, **characterised in that** two guide rails (1a, 1b) are provided which each extend in the adjusting direction (z) of the armrest (2).

23. Armrest assembly according to one of claims 2 to 22, **characterised in that** the support (1) has a mounting (1c) for the drive unit (4).

24. Armrest assembly according to claim 23, **characterised in that** the mounting (1c) surrounds the drive unit (4) in part.

25. Armrest assembly according to one of the preceding claims, **characterised in that** a gearing (41, 42, 43) mounted on the output side of the drive unit (4)has at least one gear part (42) which is capable of moving in the adjusting direction (z) of the armrest (2).

26. Armrest assembly according to claim 25, **characterised in that** the gearing part (42) is movable along a guide rail (1a, 1b).

27. Armrest assembly according to claim 26, **characterised in that** the gearing part (42) is guided along the guide rail (1a, 1b) and is preferably mounted in the guide rail (1a, 1b).

28. Armrest assembly according to one of claims 25 to 27, **characterised in that** fixing means (43) are provided on the gear part (42) for fixing the transfer member (2').

29. Armrest assembly according to one of claims 25 to 28, **characterised in that** the gearing (41, 42) is formed as a spindle or rack and pinion gearing.

30. Method for mounting an armrest assembly having an adjustable armrest according to one of the preceding claims in a motor vehicle door, whereby the armrest (2) is adjusted relative to the inner door trim panel (9) of the vehicle door in the vehicle longitudinal direction (x) so that the armrest (2) takes up a specific position in relation to the inner door trim panel (9)

31. Method according to claim 30, **characterised in that** the alignment of the armrest (2) in the vehicle longitudinal direction (x) is carried out by means of a guide (92, 92').

32. Method according to claim 30 or 31, **characterised in that** the position of the armrest (2) in relation to the door inner trim panel is additionally adjusted in a direction (y) perpendicular to the vehicle longitudinal direction and perpendicular to the adjustment direction (Z) of the armrest.

33. Method according to claim 32 or 31, **characterised in that** the adjustment of the armrest (2) in the second direction (y) is carried out through the deformation of an elastic element (21').

## Revendications

1. Ensemble accoudoir pour une portière de véhicule automobile pourvue d'un habillage intérieur de portière, comportant
- un repose-bras (2) dont la position est déplaçable par un entraînement (4),
- un organe de transmission (2') mobile suivant une direction de déplacement (z) du repose-bras (2) lors de l'activation de l'entraînement (4) et auquel peut être relié le repose-bras (2),
**caractérisé en ce que**
la position du repose-bras (2) dans la portière du véhicule automobile est réglable par ajustage pour composer des tolérances en direction longitudinale (x) du véhicule, de sorte que le repose-bras (2) occupe une position définie par rapport à l'habillage intérieur de portière (9) en direction longitudinale (x) du véhicule.

2. Ensemble accoudoir selon la revendication 1, **caractérisé en ce que** l'entraînement (4) et l'organe de transmission (2') sont agencés à titre de mécanisme de déplacement sur un support commun (1) susceptible d'être fixé sur une pièce portante (5) d'une portière de véhicule automobile.

3. Ensemble accoudoir selon la revendication 2, **caractérisé en ce que** l'entraînement (4) et l'orange de transmission (2') forment sur le support (1) une unité structurelle contrôlable au préalable qui génère un mouvement de déplacement de l'organe de transmission (2') lors de l'activation de l'entraînement.

4. Ensemble accoudoir selon l'une des revendications précédentes, **caractérisé en ce que** le réglage de la position du repose-bras dans une portière de véhicule s'effectue de telle sorte que le repose-bras (2) se laisse déplacer le long de sa direction de déplacement sans que le repose-bras (2) produise un bombement de l'habillage intérieur de portière (9) lors du mouvement de déplacement.

5. Ensemble accoudoir selon l'une des revendications précédentes, **caractérisé en ce que** pour l'orientation du repose-bras (2) en direction longitudinale (x) du véhicule, il est prévu au moins un guidage (92, 92') qui sert de préférence simultanément de guidage du repose-bras (2) le long de la direction de déplacement (z).

6. Ensemble accoudoir selon la revendication 5, **caractérisé en ce que** le repose-bras (2) s'engage par un élément de guidage (20a) dans le guidage (92, 92').

7. Ensemble accoudoir selon l'une des revendications précédentes, **caractérisé en ce que** le repose-bras (2) est relié par au moins un élément de liaison (200a, 200b) à l'organe de transmission (2') qui est mobile en direction longitudinale (x) du véhicule dans au moins un guidage (92, 92').

8. Ensemble accoudoir selon la revendication 7, **caractérisé en ce que** l'élément de liaison (200a, 200b) s'étend dans un élément écarteur (20a) qui est relié au repose-bras (2) et qui est mobile de préférence conjointement avec l'élément de liaison (200a, 200b) dans le guidage (92).

9. Ensemble accoudoir selon la revendication 8, **caractérisé en ce que** l'élément écarteur (20a) est conformé d'un seul tenant sur le repose-bras (2).

10. Ensemble accoudoir selon l'une ou l'autre des revendications 8 et 9, **caractérisé en ce que** l'élément de liaison (200a, 200b) est mobile dans l'élément écarteur (20a) en direction longitudinale (x) du véhicule.

11. Ensemble accoudoir selon l'une des revendications 5 à 10, **caractérisé en ce que** le bord du guidage (92) est pourvu d'un cadre de guidage (90).

12. Ensemble accoudoir selon l'une des revendications 5 à 11, **caractérisé en ce que** le guidage (90) est prévu dans l'habillage intérieur de portière (9).

13. Ensemble accoudoir selon l'une des revendications 5 à 12, **caractérisé en ce que** le guidage (90) s'étend entre l'organe de transmission (2') et le repose-bras (2).

14. Ensemble accoudoir selon l'une des revendications précédentes, **caractérisé en ce que** l'organe de transmission (2') d'une part et le repose-bras (2) d'autre part sont agencés de part et d'autre de l'habillage intérieur (9) de la portière de véhicule.

15. Ensemble accoudoir selon l'une des revendications précédentes, **caractérisé en ce que** pour compenser les tolérances, la position du repose-bras (2) dans la portière du véhicule automobile est réglable en supplément dans une direction (y) perpendiculaire à la direction longitudinale (x) du véhicule et perpendiculaire à la direction de déplacement (z) du repose-bras (2).

16. Ensemble accoudoir selon la revendication 15, **caractérisé en ce qu'**un élément élastique (21') sert à l'orientation du repose-bras (2) dans la deuxième direction (y) perpendiculaire à la direction longitudinale (x) du véhicule et perpendiculaire à la direction de déplacement (z) du repose-bras (2), la distance entre le repose-bras (2) et/ou l'organe de transmission (2') d'une part et l'habillage intérieur de portière (9) d'autre part étant réglable par déformation de l'élément élastique (21').

17. Ensemble accoudoir selon la revendication 16, **caractérisé en ce que** l'élément élastique (21') est agencé entre un habillage intérieur de portière (9) d'une part et le repose-bras (2) ou l'organe de transmission (2') d'autre part.

18. Ensemble accoudoir selon l'une des revendications 16 et 17, **caractérisé en ce que** l'élément élastique (21') est déformé par actionnement d'un élément de liaison (200a, 200b) via lequel le repose-bras (2) est susceptible d'être relié à l'organe de transmission (2').

19. Ensemble accoudoir selon la revendication 18, **caractérisé en ce que** l'élément de liaison (200a, 200b) agit par un élément écarteur (20a) sur l'élément élastique (21') qui entoure l'élément de liaison (200a, 200b).

20. Ensemble accoudoir selon l'une des revendications 2 à 19, **caractérisé en ce que** le support (1) comprend au moins un rail de guidage (1a, 1b) sur lequel est guidé l'organe de transmission (2').

21. Ensemble accoudoir selon la revendication 20, **caractérisé en ce que** des moyens coulissants (3) sont prévus sur le rail de guidage (1a, 1b) pour guider l'organe de transmission (2').

22. Ensemble accoudoir selon l'une ou l'autre des revendications 20 et 21, **caractérisé en ce qu'**il est prévu deux rails de guidage (1a, 1b) qui s'étendent chacun dans la direction de déplacement (z) du repose-bras (2).

23. Ensemble accoudoir selon l'une des revendications 2 à 22, **caractérisé en ce que** le support (1) présente un logement (1c) pour l'entraînement (4).

24. Ensemble accoudoir selon la revendication 23, **caractérisé en ce que** le logement (le) entoure partiellement l'entraînement (4).

25. Ensemble accoudoir selon l'une des revendications précédentes, **caractérisé en ce qu'**un mécanisme de transmission (41, 42, 43) agencé en aval de l'entraînement (4) comprend au moins une partie de transmission (42) mobile en direction de déplacement (z) du repose-bras (2).

26. Ensemble accoudoir selon la revendication 25, **caractérisé en ce que** la partie de transmission (42) est mobile le long d'un rail de guidage (1a, 1b).

27. Ensemble accoudoir selon la revendication 26, **caractérisé en ce que** la partie de transmission (42) est guidée le long du rail de guidage (1a, 1b) et est agencée de préférence dans le rail de guidage (1a, 1b).

28. Ensemble accoudoir selon l'une des revendications 25 à 27, **caractérisé en ce que** sur la partie de transmission (42) sont prévus des moyens de fixation (43) pour fixer l'organe de transmission (2').

29. Ensemble accoudoir selon l'une des revendications 25 à 28, **caractérisé en ce que** le mécanisme de transmission (41, 42) est réalisé sous forme de mécanisme de transmission à broche ou à crémaillère.

30. Procédé pour monter un ensemble accoudoir comportant un repose-bras déplaçable selon l'une des revendications précédentes dans une portière de véhicule automobile, le repose-bras (2) étant ajusté en direction longitudinale (x) du véhicule par rapport à un habillage intérieur (9) de la portière de véhicule, de sorte que le repose-bras (2) occupe une position définie par rapport à l'habillage intérieur de portière (9) en direction longitudinale (x) du véhicule.

31. Procédé selon la revendication 30, **caractérisé en ce que** l'orientation du repose-bras (2) en direction longitudinale (x) du véhicule s'effectue au moyen d'un guidage (92, 92').

32. Procédé selon l'une ou l'autre des revendications 30 et 31, **caractérisé en ce que** la position du repose-bras (2) par rapport à l'habillage intérieur de portière (9) est ajustée en supplément dans une direction (y) perpendiculaire à la direction longitudinale (x) du véhicule et perpendiculaire à la direction de déplacement (z) du repose-bras.

33. Procédé selon l'une ou l'autre des revendications 32 et 31, **caractérisé en ce que** l'orientation du repose-bras (2) dans la deuxième direction (y) s'effectue par déformation d'un élément élastique (21').
